# EUROPÄISCHE PATENTANMELDUNG

(11) **EP 3 232 136 A1**
(43) Veröffentlichungstag der Anmeldung: **18.10.2017**
(21) Anmeldenummer: 17166223.2
(22) Anmeldetag: 12.04.2017
(51) Int. Cl.: F24J 2/20, F24J 2/22, F24J 2/40, H02S 10/00

(54) **HEIZ- UND LÜFTUNGSPANEEL**

(30) Priorität: 14.04.2016 AT 1972016
(71) Anmelder: Ernst, Martin, 4150 Rohrbach/Berg (AT)
(72) Erfinder: Ernst, Martin, 4150 Rohrbach/Berg (AT)
(74) Vertreter: KLIMENT & HENHAPEL

(57) **Zusammenfassung**

Heiz- u. Lüftungspaneel zur Montage an Gebäudewänden und sonstigen Oberflächen mit einem Rückwandelement (8) und einem Frontwandelement (2), bei dem vorgeschlagen wird, dass ein Luftstromerzeuger zur Sicherstellung eines Luftstromes zwischen dem Frontwandelement (2) und dem innenseitig isolierten Rückwandelement (8) von einer Ansaugleiste zu einem in die zu beheizenden und belüftenden Räume führenden Lüftungsanschluss (13) vorgesehen ist, wobei das Frontwandelement (2) aus einem schwarzen, metallischen und undurchsichtigen Element gefertigt ist und einen mit dem Luftstromerzeuger verbundenen Stromerzeuger (1) aufweist. Die erfindungsgemäße Vorrichtung wird an oder auf Gebäudewänden, auf Gebäudedächern, sowie auch freistehend zum Einsatz gebracht. Mittels der Strahlungsenergie der Sonne wird die erfindungsgemäße Vorrichtung zum autarken, selbstständigen Heiz- und Lüftungsgerät.

## Beschreibung

Die Erfindung bezieht sich auf ein Heiz- u. Lüftungspaneel zur Montage an Gebäudewänden und sonstigen Gebäudeoberflächen mit einem Rückwandelement und einem eine Paneelaußenfläche bildenden Frontwandelement, gemäß dem Oberbegriff von Anspruch 1.

Heizpaneele unterschiedlicher Ausführung wurden in der DE 19902650A1, FR 2727790 A1 und der EP 2463601 A2 beschrieben. Die DE 199 02 650 A1 beschreibt ein Dach- oder Fassadenbauteil zur Gewinnung von elektrischer und thermischer Energie mit einer transparenten Abdeckung, die zudem wenig wärmeleitend sein soll, um die Abgabe der thermischen Energie der strahlungsabsorbierenden Schichten zur Außenumgebung zu vermindern. Die strahlungsabsorbierenden Schichten befinden sich dabei im Bereich des Rückwandelements. Die FR 2 727 790 beschreibt ein Solarmodul mit Solarzellen, die mit einer Glasschicht abgedeckt sind. Auch die EP 2 463 601 spricht von einem Solarwärmeabsorber, der zumindest bereichsweise transluzent ausgebildet ist. Die beschriebenen Aufbauten zeichnen sich durch einen vergleichsweise komplexen Aufbau aus, der sie in Anschaffung und Betrieb unwirtschaftlich gestaltet.

Das Ziel der Erfindung besteht somit in der Bereitstellung einer Vorrichtung zur Erwärmung, Belüftung und Trocknung von Gebäudeinnenräumen im Rahmen einer autarken und ökologischen Arbeitsweise, die sich in baulicher Hinsicht durch einen einfachen und kostengünstigen Aufbau auszeichnet und sich auch für eine nachträgliche Montage an Gebäudewänden und sonstigen Gebäudeoberflächen eignet.

Dieses Ziel wird durch die Merkmale von Anspruch 1 erreicht. Anspruch 1 bezieht sich dabei auf ein Heiz- u. Lüftungspaneel zur Montage an Gebäudewänden und sonstigen Gebäudeoberflächen mit einem Rückwandelement und einem eine Paneelaußenfläche bildenden Frontwandelement, bei dem erfindungsgemäß vorgeschlagen wird, dass ein Luftstromerzeuger zur Sicherstellung eines Luftstromes zwischen dem Frontwandelement und dem innenseitig isolierten Rückwandelement von einer Ansaugöffnung zu einem in die zu beheizenden und belüftenden Gebäudeinnenräume führenden Lüftungsanschluss vorgesehen ist, wobei das Frontwandelement als schwarzes, metallisches und undurchsichtiges Flächenelement gefertigt ist und einen mit dem Luftstromerzeuger verbundenen photovoltaischen Stromerzeuger aufweist.

Mittels der Strahlungsenergie der Sonne wird die schwarze, undurchsichtige Oberfläche des Frontwandelementes erwärmt. Durch den im Frontwandelement angeordneten photovoltaischen Stromerzeuger wird gleichzeitig der Luftstromerzeuger gespeist, der somit autark arbeitet. Durch die Abstrahlwärme und die Konvektion wird die durchströmende Luft, die mittels Luftstromerzeuger durch das Heiz- und Lüftungspaneel gesaugt wird, an der Rückseite des Frontwandelementes erwärmt. Ebenso werden alle im Innenraum liegenden Materialen durch Wärmeleitung der verbauten Materialien vom Frontwandelement erwärmt und geben im weiteren diese aufgenommene und gespeicherte Wärme wieder an die durchströmende Luft ab.

Die gegenständliche Erfindung ermöglicht die außerordentlich kostengünstige Herstellung eines Heiz- und Lüftungspaneels, bei dem die einstrahlende Sonnenenergie direkt vom Frontwandelement absorbiert und in Wärme umgewandelt wird. Das Frontwandelement ist hierfür schwarz, metallisch und undurchsichtig ausgeführt. Die Funktionstüchtigkeit einer solchen Vorrichtung ist keinesfalls naheliegend, unterliegt doch das metallisch ausgeführte und eine Paneelaußenfläche bildende Frontwandelement auch einer Abkühlung durch die in der Regel kalte Umgebungsluft. Daher wurde im Stand der Technik stets vorgeschlagen, strahlungsabsorbierende Schichten mit einer thermisch isolierenden Schicht abzudecken, beispielsweise einer Glasschicht.

Erstaunlicher Weise gelingt es jedoch mit einem Frontwandelement, das aus einem schwarzen, metallischen und undurchsichtigen Element gefertigt ist, auch bei kalten Umgebungstemperaturen einen Heißluftstrom mit Temperaturen über 40°C zu erzeugen. Die erfindungsgemäße Vorrichtung erweist sich dabei in europäischen Breitegraden insbesondere im Winter als effektiv, wenn die Sonne entsprechend tief steht und die Sonnenstrahlung annähernd senkrecht auf das an einer Gebäudewand angeordnete Paneel einfällt. Der im Frontwandelement integrierte Stromerzeuger stellt dabei sicher, dass der Luftstromerzeuger nur dann in Betrieb gesetzt wird, wenn Strahlungsenergie einfällt und somit für einen thermischen Übertrag zur Verfügung steht. Auf diese Weise wird sichergestellt, dass keine kalte Luft in die Gebäudeinnenräume geblasen wird. Bei Verwendung eines vom Stromerzeuger aufgeladenen Akkus kann die vom Stromerzeuger bereitgestellte elektrische Energie hingegen verwendet werden, um beispielsweise im Sommer während der Nachtstunden kühle Luft in die Gebäudeinnenräume einzublasen.

Wie bereits erwähnt wird durch die Abstrahlwärme und die Konvektion die durchströmende Luft, die mittels Luftstromerzeuger durch das Heiz- und Lüftungspaneel gesaugt wird, an der Rückseite des Frontwandelementes erwärmt. Ebenso werden alle im Innenraum liegenden Materialen durch Wärmeleitung der verbauten Materialien vom Frontwandelement erwärmt und geben im weiteren diese aufgenommene und gespeicherte Wärme wieder an die durchströmende Luft ab. Hierzu wird vorzugsweise vorgeschlagen, dass im Innenraum des Heiz- und Lüftungspaneels Luftleitflächen in dem vom Luftstromerzeuger erzeugten Luftstrom zur Verlängerung des Luftweges der durchströmenden Luft angeordnet sind. Die Luftleitflächen sind dabei im Innenraum des Heiz- und Lüftungspaneels konstruktiv eingepasst und dadurch thermisch an das Frontwandelement gekoppelt. Eine Erwärmung des Frontwandelements bewirkt somit auch eine Erwärmung der Luftleitflächen. Das so gebildete Luftleitsystem verlängert den Luftweg zur längeren Wärmeaufnahme der durchströmenden Luft und erhöht die Oberfläche für die Wärmeübertragung. Insbesondere kann durch eine geeignete Ausführung der Luftleitflächen auch erreicht werden, dass die Ansaugöffnung, über die die Luft angesaugt wird, und der Lüftungsanschluss, über den die erwärmte Luft das Paneel verlässt, an derselben Seite des Paneels angeordnet sind.

Das erfindungsgemäße Heiz- u. Lüftungspaneel kann dabei einerseits so ausgeführt werden, dass es sich bei der Ansaugöffnung um eine in das Gebäudeäußere führende Ansaugleiste handelt, oder als Umluftsystem, indem die Ansaugöffnung als ein in die zu beheizenden und belüftenden Gebäudeinnenräume führender Ansaugstutzen ausgeführt ist.

Die Erfindung wird in weiterer Folge anhand von Ausführungsbeispielen mithilfe der beiliegenden Figuren näher erläutert. Es zeigen hierbei die
Fig. 1 eine Explosionsdarstellung einer ersten Ausführungsform eines erfindungsgemäßen Heiz- und Lüftungspaneels, und die
Fig. 2 eine Explosionsdarstellung einer zweiten Ausführungsform eines erfindungsgemäßen Heiz- und Lüftungspaneels für Umluftlösungen.

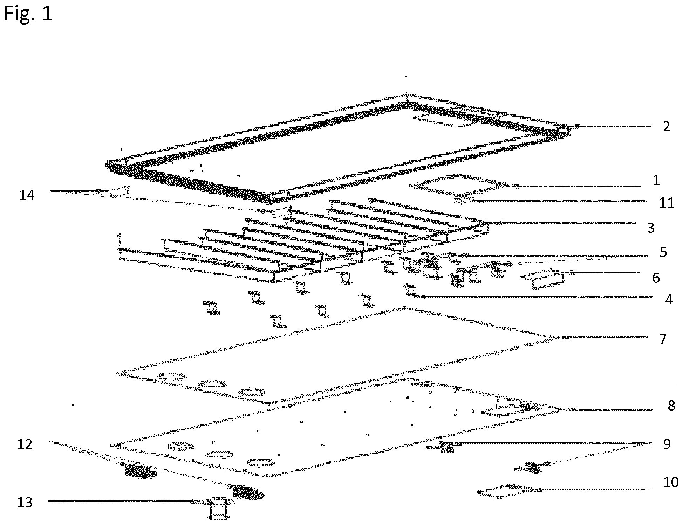

In der Fig. 1 ist ein erfindungsgemäßes Heiz- und Lüftungspaneel mit einem Frontwandelement 2 aus einem metallischen, undurchsichtigen Material dargestellt, das an der Außenseite schwarz ausgeführt ist. Das Frontwandpaneel 2 ist aus einem Stück gefertigt. Im unteren Teil des Frontwandpaneels 2 ist eine Ansaugleiste über die gesamte Breite des Frontwandelementes 2 vor Umwelteinflüssen geschützt integriert. Des Weiteren befinden sich im unteren Bereich, jedoch seitlich eingearbeitet, beidseitig mit Serviceplatten 14 abgedeckte Öffnungen für Servicearbeiten oder Tausch der Luftfilter. Der Filtereinsatz besteht aus einem Gewebe und ist formmäßig dem Innenraum des Frontwandpaneels 2 im schrägen Ansaugabschnitt angepasst. Die Maschenweite ergibt sich nach dem in der Luft beinhalteten Staub, Schmutz und kleinen Lebewesen. Die Serviceplatten 14 für die Servicierung der/des Luftfilter(s) besteht aus demselben Material wie das Frontwandpaneel 2.

Eine im oberen Bereich des Frontwandelementes 2 liegende Ausnehmung dient als Öffnung für einen Stromerzeuger 1 (Photovoltaik Dünnschicht-Paneel), der mit den Lichtstrahlen der Sonne arbeitet und dadurch Strom erzeugt und von hinten auf das Frontwandelement 2 anstehend eingebaut ist. Dieser autarke Stromerzeuger 1 kann durch eine weitere Öffnung, die zumindest die Ausmaße des Stromerzeugers 1 hat, über das Rückwandelement 8 zum Service herausgezogen werden.

Ferner können im Frontwandpaneel 2 seitlich, oben und unten Öffnungen vorgesehen sein, die bei einer seitlichen Serienkoppelung mehrerer Heiz- und Lüftungspaneele die Luftüberströmung zwischen den Paneelen ermöglichen.

Die Luftleitflächen 3 des Luftleitsystems sind aus einem metallischen, undurchsichtigen Material gefertigt, das konstruktiv so angebracht ist, dass die angesaugte Luftmenge durch das gesamte Heiz- und Lüftungspaneel vom Lufteintritt in das Heiz- und Lüftungspaneel bis zum Austritt aus dem Heiz- und Lüftungspaneel kanalisiert geführt wird.

Im Innenraum des Heiz- und Lüftungspaneels befinden sich des Weiteren Verbindungselemente 4 (Z-Profil), die das Frontwandelement 2 und das Rückwandelement 8 verbinden und so einen konstanten Abstand zwischen den beiden Elementen halten. Die Verbindungselemente 4 sind aus einem stabilen, beispielsweise metallischen Material gefertigt.

Als Halter 5 für den Stromerzeuger 1 sind Hutprofile aus stabilem, beispielsweise metallischem Material vorgesehen, die dazu bestimmt sind den Stromerzeuger 1 in einem konstanten Abstand zum Frontwandelement 2 zu halten. Sie dienen gleichzeitig als Entkoppelung des Stromerzeugers 1 zum Frontwandelement 2.

Ferner sind E-Halter 6 vorgesehen, die aus einem gekanteten Profil aus einem stabilen, beispielsweise metallischen Material gefertigt sind und dazu bestimmt sind, die gesamten Klemmverbindungen aufzunehmen. Auch der Stromspeicher für den Nachtmodus/Nachtbetrieb ist an dieser Konsole montiert.

Auf der Innenseite des Rückwandelements 8 ist eine Isolation 7 aus Polypropylen, Polyethylen, oder auch einem Elastomer aufgebracht, die den Wärmeverlust über das Rückwandelement 8 verhindert. Die Isolation 7 ist auch als Schutz vor Kondensatbildung an der Innenseite des Rückwandelementes 8 aufgebracht. Des Weiteren wirkt die Isolation 7 auch als akustische Isolierung gegen die Vibrationen, die vom Luftstromerzeuger ausgehen.

Das Rückwandelement 8 besteht aus einem metallischen, undurchsichtigen Material. In diesem Rückwandelement 8 sind Ausnehmungen für den Eingriff und Service der Stromversorgung, des Luftstromerzeugers und der Elektrik vorgesehen. Des Weiteren sind im oberen Bereich des Rückwandelementes 8 Ausnehmungen vorgesehen, in denen die Thermoelemente eingearbeitet sind. Die Thermoelemente bestehen aus zwei verschiedenen Metallen, die so miteinander verbunden sind, dass diese bei einer gewissen Innentemperatur eine Öffnung im oberen Bereich des Rückwandelementes 8 frei geben und so eine Überhitzung des Heiz- u. Lüftungspaneels verhindern.

Das Heiz- und Lüftungspaneel wird mittels oberer Halteelemente 9 und unterer Halteelemente 12 an Gebäuden an der dem Gebäudeäußeren zugewandten Außenseite der zu beheizenden und belüftenden Gebäudeinnenräume befestigt. Die Halteelemente 9, 12 bestehen aus einem stabilen, auch metallischen Material, und ermöglichen eine leichte Montage des Heiz- und Lüftungspaneels.

Im oberen Bereich des Rückwandelements 8 befindet sich eine weitere Öffnung mit einer Abdeckplatte 10, durch die die Stromverbindungen überwacht und kontrolliert werden können. Durch diese Öffnung ist ferner der Akkublock zugänglich, der bei Sonneneinstrahlung (Tagesmodus) über den Stromerzeuger 1 geladen wird, und für den Nachtbetreib (Lüftungsbetrieb) den Luftstromerzeuger mit Strom versorgt. Die Abdeckplatte 10 besteht aus demselben Material wie das Rückwandelement 8. Ferner ist ein E-Klemmkasten 11 für das Verbindungsprofil und den Stromspeicher vorgesehen, der ebenfalls aus einem stabilen, metallischen Material gefertigt sein kann.

Ein Luftstromerzeuger sorgt für den notwenigen Luftstrom im Heiz- und Lüftungspaneel. Im unteren Bereich des Rückwandelementes 8 befinden sich Öffnungen, durch die die gefilterte, erwärmte Luft über den Luftstromerzeuger austritt. Der Luftstromerzeuger ist mittels Flanschplatte von außen auf das Rückwandelement 8 aufgesetzt. Je nach Kundenwunsch kann dieser Luftstromerzeuger auf drei Positionen angebracht werden. Restöffnungen werden mittels isolierten Blindabdeckungen verschlossen. An der zweiten Seite der Flanschplatte (von außen) befindet sich der Lüftungsanschluss 13, der etwa als Anschlussstutzen ausgeführt ist und über den die gereinigte und erwärmte Luft über eine Luftleitung (flexibel oder auch starr) abtransportiert und dem Gebäudeinnenraum zugeführt wird. Der Anschlussstutzen besteht aus Kunststoff oder Metall und dient dazu die Verbindung zwischen dem Rückwandelement 8 und den Luftleitungen (flexibel oder starr) herzustellen.

Das Heiz- u. Lüftungspaneel kann ferner mit einem optischen Designrahmen, je nach Kundenwunsch, nachträglich ausgestattet werden. Das Material dieses Designrahmens kann aus allen umweltbeständigen Materialen wie beispielsweise Holz, Metall, Glas und Kunststoff oder auch mineralischorganischen Verbundwerkstoffen gefertigt werden.

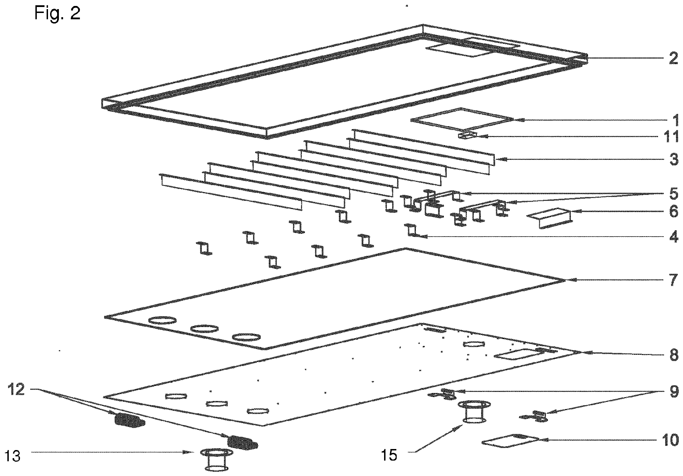

Die Ausführungsform der Fig. 2 unterscheidet sich von jener der Fig. 1 darin, dass anstelle der in das Gebäudeäußere führenden Ansaugleiste ein Ansaugstutzen 15 vorgesehen ist, der in die zu beheizenden und belüftenden Gebäudeinnenräume führt. Die zu erwärmende Luft wird dabei im Rahmen eines Umluftsystems aus dem zu beheizenden Gebäudeinnenraum abgesaugt, über den Ansaugstutzen 15 durch das Heiz- und Lüftungspaneel geführt und als erwärmte Luft über den Lüftungsanschluss 13 wieder dem Gebäudeinnenraum rückgeführt. Der Luftstromerzeuger wird dabei bevorzugt im Bereich des Lüftungsanschlusses 13 angeordnet.

Die Funktionsweise der Erfindung wird nun in weiterer Folge genauer definiert und beschrieben. Die Struktur dieser Beschreibung folgt dabei dem Weg der Luft durch die erfindungsgemäße Vorrichtung.

Das Grundprinzip des Heiz- und Lüftungspaneels basiert auf dem physikalischen Prinzip der Konvektion. Die zu erwärmende Luft wird entweder als Außenluft (Umgebungsluft) über die Ansaugleiste (Fig. 1) oder als Innenluft über den Ansaugstutzen 15 (Fig. 2) angesaugt. Die Ansaugleiste oder der Ansaugstutzen 15 sind mit einem Luftfilter versehen, der die durchströmende Luft von Schmutz und sonstigen Verunreinigungen befreit.

Die angesaugte und gereinigte Luft wird über ein in der Größe abgestimmtes Luftleitsystem, welches aus Luftleitflächen 3 gebildet wird, die sich zwischen dem Frontwandelement 2 und dem innenseitig isolierten Rückwandelement 8 befinden, bis zum Luftstromerzeuger transportiert. Anschließend drückt der Luftstromerzeuger die gereinigte und erwärmte Luft über den Lüftungsanschluss 13 in die zu beheizenden und belüftenden Räume. Der vorher genannte Lüftungsanschluss 13 stellt die Schnittstelle zwischen dem Heiz- und Lüftungspaneel und dem Gebäudeinnenraum dar.

Bei Sonneneinstrahlung wird durch die Wärmestrahlen der Sonne das schwarze, matte oder glänzende und undurchsichtige Frontwandelement 2 erwärmt. Ebenso wird die durch die Wärmeleitfähigkeit des Materials des Frontwandelements 2 gewonnene Wärme an die innenliegenden Luftleitflächen 3 übertragen. Mittels aller durch die Wärmestrahlen der Sonne erwärmten Teile des Heiz- und Lüftungspaneels wird Wärme an die filtergereinigte, durchströmende Luft mittels Wärmeabstrahlung abgegeben. Die angesaugte und durch Filter gereinigte Luft wird bei diesem Vorgang (wie oben beschrieben) durch den Innenraum des Heiz- und Lüftungspaneels geführt und nimmt dabei die Abstrahlwärme des Frontwandelements 2 und der Luftleitflächen 3 im Innenraum des Heiz- und Lüftungspaneels auf. Die im Innenraum an das Rückwandelement 8 aufgebrachte Isolation 7 verhindert dabei den Wärmeverlust über das Rückwandelement 8.

Mit einem Raumthermostat wird die erfindungsgemäße Vorrichtung gesteuert. Über dieses Thermostat wird die Ein- und Ausschalttemperatur geschaltet. Es zeigt auch gleichzeitig die Raumtemperatur der zu beheizenden oder belüftenden Gebäudeinnenräume an. Mit einem Ein-Ausschalter kann die erfindungsgemäße Vorrichtung ein- und ausgeschaltet werden. Über einen Stromspeicher wird der Nachtmodus versorgt.

Der in der Steuerung hinterlegte Lüftungs- und Nachtmodus steuert den Betrieb selbstständig.

Die erfindungsgemäße Vorrichtung wird an oder auf Gebäudewänden, auf Gebäudedächern, sowie auch freistehend zum Einsatz gebracht. Mittels der Strahlungsenergie der Sonne wird die erfindungsgemäße Vorrichtung zum autarken, selbstständigen Heiz- und Lüftungsgerät.

## Patentansprüche

1. Heiz- u. Lüftungspaneel zur Montage an Gebäudewänden und sonstigen Gebäudeoberflächen mit einem Rückwandelement (8) und einem eine Paneelaußenfläche bildenden Frontwandelement (2), **dadurch gekennzeichnet, dass** ein Luftstromerzeuger zur Sicherstellung eines Luftstromes zwischen dem Frontwandelement (2) und dem innenseitig isolierten Rückwandelement (8) von einer Ansaugöffnung zu einem in die zu beheizenden und belüftenden Gebäudeinnenräume führenden Lüftungsanschluss (13) vorgesehen ist, wobei das Frontwandelement (2) als schwarzes, metallisches und undurchsichtiges Flächenelement gefertigt ist und einen mit dem Luftstromerzeuger verbundenen photovoltaischen Stromerzeuger (1) aufweist.

2. Heiz- u. Lüftungspaneel nach Anspruch 1, **dadurch gekennzeichnet, dass** im Innenraum des Heiz- und Lüftungspaneels Luftleitflächen (3) in dem vom Luftstromerzeuger erzeugten Luftstrom zur Verlängerung des Luftweges der durchströmenden Luft angeordnet sind.

3. Heiz- u. Lüftungspaneel nach Anspruch 1 oder 2, **dadurch gekennzeichnet, dass** es sich bei der Ansaugöffnung um eine in das Gebäudeäußere führende Ansaugleiste handelt.

4. Heiz- u. Lüftungspaneel nach Anspruch 1 oder 2, **dadurch gekennzeichnet, dass** es sich bei der Ansaugöffnung um einen in die zu beheizenden und belüftenden Gebäudeinnenräume führenden Ansaugstutzen (15) handelt.
